# EUROPEAN PATENT APPLICATION

(11) **EP 2 923 867 A1**
(43) Date of publication of application: **30.09.2015**
(21) Application number: 14162470.0
(22) Date of filing: 28.03.2014
(51) Int. Cl.: B60H 1/00

(54) **A cabin and battery heating system**

(71) Applicant: Tofas Turk Otomobil Fabrikasi Anonim Sirketi, Bursa (TR)
(72) Inventor: Ayarturk, Hasan, Osmangazi Bursa (TR); Odabasioglu, Arda, Osmangazi Bursa (TR); Karakaya, Utku, Osmangazi Bursa (TR)
(74) Representative: Dericioglu Kurt, Ekin

(57) **Abstract**

The present invention relates to a cabin and battery heating (1) system which allows safe use, consumes less energy as no electrical heater (PTC) is used, and can operate at cold climate conditions. Basically characterized by
- at least one battery heating-cooling unit (2) which is adapted to heat and cool the battery,
- at least one cooler heat exchanger (3) which enables cooling,
- at least one heater heat exchanger (4) which enables heating,
- at least one compressor (5) which is adapted to provide cool air,
- at least one motor cooling circulation pump (6) which enables circulation of the heat exchanging substance in the motor,
- at least one battery cooling system circulation pump (7) which enables circulation of the heat exchanging substance in the battery,
- at least one motor cooling coil (radiator) (8) which performs cooling,
- at least one motor cooling fan (9) which enables to cool the motor cooling coil (8),
- at least one cabin heating coil (10) which is located in the HVAC module (H) and enables to heat the cabin,
- at least one cabin cooling coil (11) which is located in the HVAC module (H) and enables to cool the cabin,
- at least one solenoid controlled expansion valve (12) which enables expansion by means of its solenoid control,
- at least one ventilation fan (13) which is located in the HVAC module (H) and enables to cool the cabin cooling coil (11),
- at least one three-way valve (14) which can provide flow to three directions,
- at least one solenoid controlled coolant valve (15) which enables fluid flow thanks to its solenoid control,
- at least one single-way valve (16) which provides flow to a single direction.

## Description

### Field of the Invention

The present invention relates to a cabin and battery heating system which allows safe use, consumes less energy as no electric heater (PTC) is used and can operate at cold climate conditions.

### Background of the Invention

In the applications used in the state of the art, the PTC electrical heater system used for heating the cabins and batteries of electric vehicles reduces the range of vehicles by consuming too much energy. Additionally, the fuel heating system used for heating the cabins and batteries of electric vehicles is expensive and complicated due to the fuel tank and fuel combustion elements. The fuel system which is normally not provided in electric vehicles also poses a safety risk.

In the applications used in the state of the art, the hot gas heating system used for heating the cabins and batteries of electric vehicles reduces the range of vehicles by consuming too much energy although it has a very simple structure. Furthermore, the elements required for the heat pump system used for heating the cabin and battery of electric vehicles are expensive and complicated. Commercially, supplying it by mass production is difficult. In addition to these, coolants which are defined by legal norms and commercially used at very cold temperatures under -20°C (cold climate vehicles) cannot be used as heat pump systems.

The United States patent document no. US2013098577 (A1**),** an application in the state of the art, discloses a climate control system for a cabin of an electric vehicle. The system comprises a heat exchanger in relation with the air in the cabin and control valves. The climate control system includes hot liquid flow loop for cabin heating mode and cold liquid flow loop for cabin cooling mode. An electric compressor motor is operated by a charge unit to operate a refrigerant compressor.

The Japanese patent document JP2006016000 (A**),** an application in the state of the art, discloses a temperature adjusting device of a battery. The temperature adjusting device improves heat utilization yield during heating or cooling the battery. The air in the vehicle cabin passes through the flow channel for heating or cooling the battery. The waste heat of the air is used in the air conditioning system of the vehicle.

The International patent document no. WO02064389 (A1**),** an application in the state of the art, discloses an air conditioner system. The air conditioning system comprises an electric-driven two-stage compression system compressor. In vehicles using electricity as an energy source, a refrigerant heat exchanger for cooling the refrigerant compressed at a first stage is installed and heat exchange with cabin air is enabled. The heat of the refrigerant is used for heating together with the heat of coolant for cooling a motor.

### Summary of the Invention

The objective of the present invention is to provide a cabin and battery heating system which enables safe use.

Another objective of the present invention is to provide to a cabin and battery heating system which consumes less energy as no electric heater (PTC) is used and which can operate at cold climate conditions.

### Detailed Description of the Invention

A cabin and battery heating system developed to fulfill the objective of the present invention is illustrated in the accompanying figure, in which:

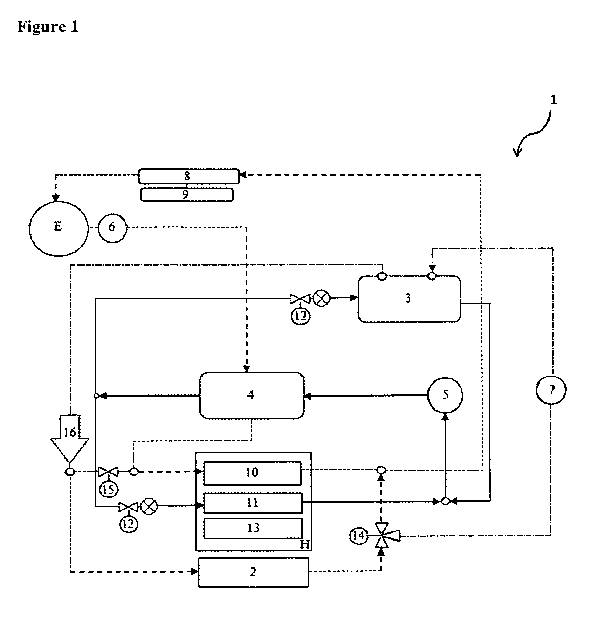

Figure 1 is the schematic view of the cabin and battery heating system.

The components shown in the figures are each given reference numbers as follows:
- **1.**: Cabin and battery heating system
- **2.**: Battery heating-cooling unit
- **3.**: Cooler heat exchanger
- **4.**: Heater heat exchanger
- **5.**: Compressor
- **6.**: Motor cooling system circulation pump
- **7.**: Battery cooling system circulation pump
- **8.**: Motor cooling coil (radiator)
- **9.**: Motor cooling fan
- **10.**: Cabin heating coil
- **11.**: Cabin cooling coil
- **12.**: Solenoid controlled expansion valve
- **13.**: Ventilation fan
- **14.**: Three-way valve
- **15.**: Solenoid controlled coolant valve
- **16.**: Single-way valve
- **E.**: Electric motor
- **H.**: HVAC module

A cabin and battery heating system (1), which allows safe use, consumes less energy as no electric heater (PTC) is used, and can operate at cold climate conditions, basically comprises
- at least one battery heating-cooling unit (2) which is adapted to heat and cool the battery,
- at least one cooler heat exchanger (3) which enables cooling,
- at least one heater heat exchanger (4) which enables heating,
- at least one compressor (5) which is adapted to provide cool air,
- at least one motor cooling circulation pump (6) which enables circulation of the heat exchanging substance in the motor,
- at least one battery cooling system circulation pump (7) which enables circulation of the heat exchanging substance in the battery,
- at least one motor cooling coil (radiator) (8) which performs cooling,
- at least one motor cooling fan (9) which enables to cool the motor cooling coil (8),
- at least one cabin heating coil (10) which is located in the HVAC module (H) and enables to heat the cabin,
- at least one cabin cooling coil (11) which is located in the HVAC module (H) and enables to cool the cabin,
- at least one solenoid controlled expansion valve (12) which enables expansion by means of its solenoid control,
- at least one ventilation fan (13) which is located in the HVAC module (H) and enables to cool the cabin cooling coil (11),
- at least one three-way valve (14) which can provide flow to three directions,
- at least one solenoid controlled coolant valve (15) which enables fluid flow thanks to its solenoid control,
- at least one single-way valve (16) which provides flow to a single direction.

In the preferred embodiment of the invention, the cabin and battery heating system (1) of the present invention comprises a battery heating-cooling unit (2) which is adapted to heat and cool the battery, a cooler heat exchanger (3) which enables cooling, a heater heat exchanger (4) which enables heating, a compressor (5) which is adapted to provide cool air, a motor cooling circulation pump (6) which enables circulation of the heat exchanging substance in the motor, a battery cooling system circulation pump (7) which enables circulation of the heat exchanging substance in the battery, a motor cooling coil (radiator) (8) which performs cooling, a motor cooling fan (9) which enables to cool the motor cooling coil (8), a cabin heating coil (10) which is located in the HVAC module (H) and enables to heat the cabin, a cabin cooling coil (11) which is located in the HVAC module (H) and enables to cool the cabin, a solenoid controlled expansion valve (12) which enables expansion by means of its solenoid control, a ventilation fan (13) which is located in the HVAC module (H) and enables to cool the cabin cooling coil (11), a three-way valve (14) which can provide flow to three directions, a solenoid controlled coolant valve (15) which enables fluid flow by means of its solenoid control, and a single-way valve (16) which provides flow to a single direction.

In the preferred embodiment of the cabin and battery heating system of the present invention (1), in order to heat the battery and the cabin; the coolant, which is heated in the electric motor (E) and is used in the first loop, is sucked by the motor cooling system circulation pump (6) and is pumped to the heater heat exchanger (4) for being heated. The fluid, which leaves the heater heat exchanger (4), and is used in the first loop, is delivered to the solenoid controlled coolant valve (15) so as to be transmitted to the cabin heating coil (10) and the battery heating-cooling unit (2). The coolant, which enables to heat the battery, leaves the battery heating-cooling unit (2), and is used in the first loop, is transmitted to the three-way valve (14). The coolant used in the first loop is either united with the fluid coming from the cabin heating coil (10) by the three way valve (14) and cooled by being delivered to the motor cooling coil (radiator) (8) cooled by the motor cooling fan (9), then transmitted to the electric motor (E) and the loop is established; or for cooling mode, the coolant is delivered to the cooler heat exchanger (3) via the battery cooling system circulation pump (7), is cooled again and cooling loop is provided.

In the preferred embodiment of the cabin and battery heating system of the present invention (1), for cooling the battery; the solenoid controlled coolant valve (15) is closed and this way the hot fluid which is used in the first loop and is heated is prevented from going to the battery heating-cooling unit (2). The coolant, which leaves the battery heating-cooling unit (2), and is used in the first loop, is transmitted to the three way valve (14). The coolant, which is used in the first loop, is delivered to the cooler heat exchanger (3) by the three way valve (14) for the cooling process via the battery cooling system circulation pump (7). The fluid, which leaves the cooler heat exchanger (3), and is used in the first loop, is delivered back to the battery heating-cooling unit (2) by the single-way valve (16) to cool the battery and thus the cooling loop is completed.

In the preferred embodiment of the cabin and battery heating system of the present invention (1), for cooling the cabin; firstly the solenoid controlled expansion valve (12) is closed and the gas-phase cooling substance (liquid) which is compressed and heated by the compressor (5) and is used in the second loop is delivered to the heater heat exchanger (4). The hot cooling substance (liquid), which is used in the second loop, transfers its heat at the heater heat exchanger (4) to the coolant which is used in the first loop used for heating the cabin and battery; and the cooling substance (liquid) used in the second loop returns to liquid phase. The cooling substance (liquid), which passes to liquid phase and is used in the second loop, bifurcates into two parts when leaving the heater heat exchanger (4) and thereby both passes through the solenoid controlled coolant valve (15) and enables to cool the cooling substance used in the first loop via the cooler heat exchanger (3) and goes to the compressor (5); and passes through the cabin cooling coil (11) via the solenoid controlled coolant valve (15) in order to perform cabin cooling process and goes to the compressor (5).

## Claims

1. A cabin and battery heating system (1), which allows safe use, consumes less energy as no electric heater (PTC) is used, and can operate at cold climate conditions, basically **characterized by**
- at least one battery heating-cooling unit (2) which is adapted to heat and cool the battery,
- at least one cooler heat exchanger (3) which enables cooling,
- at least one heater heat exchanger (4) which enables heating,
- at least one compressor (5) which is adapted to provide cool air,
- at least one motor cooling circulation pump (6) which enables circulation of the heat exchanging substance in the motor,
- at least one battery cooling system circulation pump (7) which enables circulation of the heat exchanging substance in the battery,
- at least one motor cooling coil (radiator) (8) which performs cooling,
- at least one motor cooling fan (9) which enables to cool the motor cooling coil (8),
- at least one cabin heating coil (10) which is located in the HVAC module (H) and enables to heat the cabin,
- at least one cabin cooling coil (11) which is located in the HVAC module (H) and enables to cool the cabin,
- at least one solenoid controlled expansion valve (12) which enables expansion by means of its solenoid control,
- at least one ventilation fan (13) which is located in the HVAC module (H) and enables to cool the cabin cooling coil (11),
- at least one three-way valve (14) which can provide flow to three directions,
- at least one solenoid controlled coolant valve (15) which enables fluid flow thanks to its solenoid control,
- at least one single-way valve (16) which provides flow to a single direction.

2. A cabin and battery heating system (1) according to Claim 1, **characterized by** the motor cooling system circulation pump (6) which enables to use the coolant heated in the electric motor (E) to be used in the first loop.

3. A cabin and battery heating system (1) according to Claim 1, **characterized by** the three way valve (14) which enables the coolant used in the first loop to be united with the fluid coming from the cabin heating coil (10) and to be cooled by being delivered to the motor cooling coil (radiator) (8) cooled by the motor cooling fan (9), then to be transmitted to the electric motor (E); and enables the loop to be completed.

4. A cabin and battery heating system (1) according to Claim 1, **characterized by** the three way valve (14) which enables, for the cooling mode, the coolant used in the first loop to be delivered to the cooler heat exchanger (3) via the battery cooling system circulation pump (7) and to be cooled again.

5. A cabin and battery heating system (1) according to Claim 1, **characterized by** the solenoid controlled coolant valve (15) which, by being closed, prevents the hot fluid, which is used in the first loop and is heated, from going to the battery heating-cooling unit (2).

6. A cabin and battery heating system (1) according to Claim 1, **characterized by** the solenoid controlled expansion valve (12) which is closed for the process of cooling the cabin.

7. A cabin and battery heating system (1) according to Claim 1, **characterized by** the heater heat exchanger (4) which transfers the heat of the gas-phase cooling substance, which is compressed and heated by the compressor (5) and is used in the second loop, to the coolant which is used in the first loop used for heating the cabin and battery.

8. A cabin and battery heating system (1) according to Claim 1, **characterized by** the cooler heat exchanger (3) which enables the cooling substance, which passes to liquid-phase and is used in the second loop, to cool the cooling substance used in the first loop and go to the compressor (5).
